# FASCICULE DE BREVET EUROPEEN

(11) **EP 1 537 724 B1**
(45) Date de publication et mention de la délivrance du brevet: **14.11.2007**
(21) Numéro de dépôt: 03780263.4
(22) Date de dépôt: 09.09.2003
(51) Int. Cl.: H04M 3/30, H04M 11/06

(54) **DISPOSITIF DE CONTROLE D'UNE LIGNE DE COMMUNICATION XDSL**
EINRICHTUNG ZUR STEUERUNG EINER XDSL-ÜBERTRAGUNGSLEITUNG
DEVICE FOR CONTROLLING AN XDSL COMMUNICATION LINE

(30) Priorité: 11.09.2002 FR 0211241
(43) Date de publication de la demande: 08.06.2005
(73) Titulaire: Acterna IPMS, 78190 Trappes (FR)
(72) Inventeur: SCHMITT, Jean, F-28260 ROUVRES (FR); LE FOLL, Dominique, PL21 9XA Ivybridge DEVON (GB)
(74) Mandataire: Poulin, Gérard
(86) Numéro de dépôt international: PCT/FR2003/050049
(87) Numéro de publication internationale: WO 2004/028130

(56) Documents cités:
- WO-A-01/10054
- US-B1- 6 330 306
- TILL J: "MODEM MANAGER MONITORS A VARIETY OF DEVICES" ELECTRONIC DESIGN, PENTON PUBLISHING, CLEVELAND, OH, US, vol. 36, no. 13, 22 juin 1989 (1989-06-22), pages 123-124, XP000471567 ISSN: 0013-4872
- MAESHIMA O ET AL: "A method of service quality estimation with a network measurement tool" PERFORMANCE, COMPUTING AND COMMUNICATIONS CONFERENCE, 1999 IEEE INTERNATIONAL SCOTTSDALE, AZ, USA 10-12 FEB. 1999, PISCATAWAY, NJ, USA,IEEE, US, 10 février 1999 (1999-02-10), pages 201-209, XP010323642 ISBN: 0-7803-5258-0

## Description

### DOMAINE TECHNIQUE

L'invention se situe dans le domaine de la mesure des perturbations et de la qualité de service des liaisons large bande xDSL.

L'invention concerne plus spécifiquement un dispositif de contrôle d'une ligne de transmission comportant au moins un premier canal de transmission à large bande reliant au moins un abonné à un serveur de données numériques et au moins un deuxième canal transmission à bande étroite reliant ledit abonné à un réseau téléphonique, ledit dispositif comportant un bloc de mesure destiné à évaluer les performances, rechercher les défauts et établir la qualité de la ligne et des services transmis à travers ladite ligne.

Plus particulièrement, l'invention s'applique dans un système de mesure des perturbations dans une ligne de transmission reliant un abonné d'une part à un serveur haut débit via un modem xDSL et d'autre part à un réseau téléphonique commuté.

### ETAT DE LA TECHNIQUE ANTERIEURE

La bande passante du réseau téléphonique classique existant, limité à 300-3400 Hz, ne permet pas de transporter des applications haut débit vers les abonnés. Aussi, pour remédier à ce problème, une première solution consiste à développer un réseau de fibres optiques jusqu'au domicile des abonnés. Cette solution s'est cependant révélée trop coûteuse.

Une deuxième solution a consisté à doper le réseau téléphonique existant dans les derniers kilomètres de la transmission. Cette deuxième solution est rendue possible au moyen des technologies xDSL (pour x Digital Subscriber Line). Cette technologie consiste à transmettre des flots de données à grande vitesse sur de simples lignes téléphoniques torsadées en utilisant des techniques de traitement du signal permettant d'augmenter le débit dont la clé réside dans la modulation de la porteuse. En effet, il existe différentes techniques de traitement de la porteuse en fonction de la donnée à transmettre parmi lesquelles :
- une modulation du type CAP (pour Carrierless Amplitude Modulation en anglais) permettant de coder jusqu'à 9 bits par symbole ce qui permet de transmettre la même quantité d'informations sur une bande de fréquence réduite. Dans cette technique la porteuse n'est pas transmise du fait qu'elle ne contient aucune information.
- Une modulation du type DMT (pour Discrète Multitone en anglais) consistant à partager la bande passante disponible en un nombre élevé de canaux recevant chacun une modulation de type QAM (pour Quadrature Amplitude Modulation en anglais) et transmis en parallèle.

Le site Internet http:/www.etsi.org présente les différentes variantes de la technologie xDSL parmi lesquelles :
- HDSL : pour High Bit Rate DSL permettant d'atteindre un débit de 2 Mbps sur une distance de 3 Km ;
- SDSL : pour Single pair ou Symetric DSL permettant d'atteindre jusqu'à un débit de 2,3 Mbps sur une distance de 3,6 Km ;
- ADSL : pour Assymetric DSL permettant d'atteindre un débit descendant de 1544 Kbps à 9 Mbps sur une distance de 5,4 Km, et un débit montant de 16 Kbps à 640 Kbps sur une distance de 5,4 Km ;
- VDSL : pour Very High data DSL permettant d'atteindre un débit descendant de 13 Mbps à 55,2 Mbps sur une distance de 5,4 Km, et un débit montant de 0,128 Mbps à 1 Mbps sur une distance de 1,3 Km.

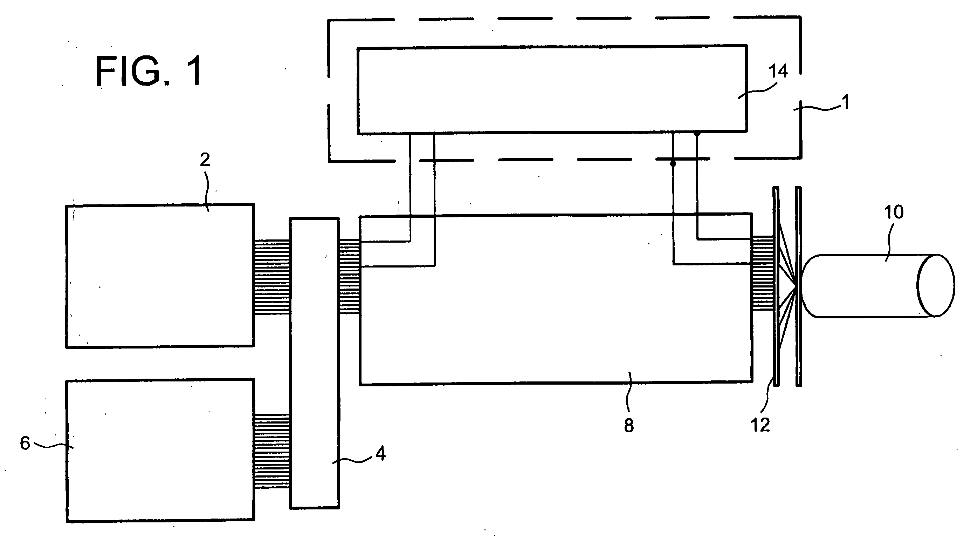

En référence à la figure 1, une liaison ADSL comporte un équipement de multiplexage 2 appelé DSLAM (pour Digital Subscriber Line Access Multiplexer) assurant le multiplexage des flux ATM échangés avec le réseau haut débit vers le réseau de transport, un filtre d'aiguillage 4 appelé « splitter » en langue anglaise destiné à séparer la bande passante réservée au service téléphonique de la bande passante utilisée pour la transmission haut débit. Ce filtre 4 assure un découpage suffisant pour éviter que les signaux émis sur l'une des bandes de fréquences ne viennent perturber le fonctionnement de l'autre. Le splitter 4 est relié au réseau téléphonique via un commutateur public 6 et au réseau haut débit via le DSLAM 2. Du côté de l'utilisateur, un deuxième splitter non représenté, permet de récupérer les signaux émis dans la bande de fréquences passante utilisée pour la transmission ADSL et de les transmettre vers un modem ADSL relié à un réseau local ou à un équipement numérique de traitement tel qu'un ordinateur par exemple, et les signaux émis dans la bande de fréquences passante utilisée pour la transmission de la voix.

Une matrice de connexion 8 (TAMS pour Test Access Matrix Switch en anglais) est agencée entre le filtre d'aiguillage 4 et la boucle locale 10 via un répartiteur 12. La matrice de connexion 8 est reliée à un module de mesure 14 destiné à évaluer les performances, rechercher les défauts et tester la ligne de transmission et les services fournis à travers cette ligne.

Un problème majeur de l'art antérieur provient du fait que lors d'un contrôle de la ligne de communication, les dispositifs connus imposent l'interruption de la liaison à large bande et de la liaison à bande étroite. Or, il peut être souhaitable de maintenir une communication téléphonique lorsque le contrôle concerne uniquement une liaison à large bande, comme il peut être souhaitable de maintenir une liaison à large bande si le contrôle concerne uniquement le canal téléphonique transportant la voix.

Le document WO-A-02/063861 décrit un système pour améliorer la transmission de signaux DSL via la boucle locale comportant un module d'extension de boucle assurant les fonctions de communication, de contrôle et de diagnostic, et un module central de commande destiné à commander ledit module d'extension de boucle et couplé à ce dernier via la boucle locale.

Le document US2001/0053205 décrit un circuit d'abonné connecté à travers une ligne d'abonné à un équipement d'abonné et comportant un séparateur de fréquence destiné à partager le signal en une étroite bande de fréquence et une large bande étroite de fréquence, une ligne d'alimentation destinée à fournir un courant audit équipement d'abonné via ladite ligne d'abonné, un sélecteur de voie destiné à sélectionner l'une de deux voies reliant la ligne d'abonné et la ligne d'alimentation, la première voie comportant ledit séparateur et la deuxième voie ne comportant pas de séparateur.

Le but de l'invention est de pallier les insuffisances de l'art antérieur au moyen d'un dispositif qui permet un contrôle sélectif de l'un ou de plusieurs canaux de transmission sans interrompre les autres canaux non contrôlés.

### EXPOSÉ DE L'INVENTION

L'invention préconise un dispositif de contrôle d'une ligne de transmission véhiculant une pluralité de canaux de transmission numériques et/ou analogiques comportant un bloc de mesure destiné à tester la qualité de la ligne et des services transmis.

Selon l'invention, ce dispositif comporte en outre un module de commutation apte à relier sélectivement le bloc de mesure uniquement aux canaux de transmission à contrôler et maintenir actifs les autres canaux de la ligne transmission.

Dans une application particulière de l'invention, ladite ligne de transmission comporte au moins un premier canal de transmission à large bande reliant au moins un abonné à un serveur de données numériques et au moins un deuxième canal transmission à bande étroite reliant ledit abonné à un réseau téléphonique.

Dans un mode de réalisation de l'invention, le canal de transmission à large bande est du type xDSL et le canal transmission à bande étroite est une ligne téléphonique numérique ou analogique.

Dans ce cas, le dispositif selon l'invention permet de contrôler les canaux à large bande sans interrompre le canal « téléphonique » qui peut être analogique réservé à la transmission de la voix, des télécopies ou des données, ou numérique de type RNIS ou tout autre service transporté dans la bande de fréquences inférieure à 20 kHz). Ce dispositif permet également de contrôler le canal « téléphonique » sans perturber les canaux à large bande.

Préférentiellement, ledit module de commutation comporte un filtre programmable apte à relier sélectivement le bloc de mesure uniquement au canal de transmission à large bande (respectivement uniquement au canal de transmission à bande étroite) et à maintenir une liaison avec la boucle locale uniquement à travers le canal de transmission à large bande (respectivement uniquement au canal de transmission à bande étroite).

L'invention concerne également un procédé de contrôle d'une ligne de transmission comportant une pluralité de canaux de transmission numériques et/ou analogiques consistant à relier sélectivement un bloc de mesure 14 uniquement au canal de transmission à large bande (respectivement uniquement au canal de transmission à bande étroite) et à maintenir une liaison avec la boucle locale uniquement à travers le canal de transmission à large bande (respectivement uniquement au canal de transmission à bande étroite)

### BRÈVE DESCRIPTION DES DESSINS

D'autres caractéristiques et avantages de l'invention ressortiront de la description qui va suivre, prise à titre d'exemple non limitatif en référence aux figures annexées dans lesquelles :
- la figure 1 illustre schématiquement les blocs fonctionnels composant une ligne ADSL,
- la figure 2 illustre schématiquement un premier mode préféré de réalisation d'un dispositif selon l'invention.
- la figure 3 illustre schématiquement un mode préféré de réalisation d'un dispositif selon l'invention.

### EXPOSÉ DÉTAILLÉ DE MODES DE RÉALISATION PARTICULIERS

La description qui suit concerne une application de l'invention dans la ligne de transmission reliant un abonné d'une part à un réseau haut débit de type IP, et d'autre part à un réseau téléphonique commuté RTC public via une liaison ADSL.

Dans la suite de la description, des références numériques identiques seront utilisées pour désigner les éléments communs aux dispositifs de l'art antérieur et aux dispositifs selon l'invention.

La figure 1 décrite précédemment illustre une ligne ADSL.

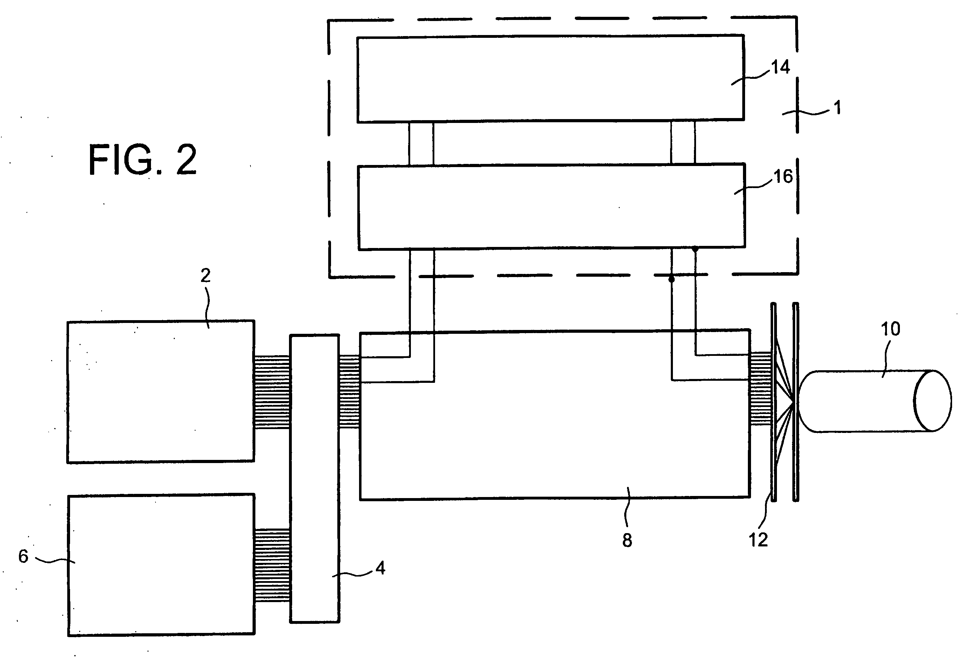

En référence à la figure 2, le module de commutation 16 est un constitué par un filtre numérique susceptible d'être configuré en fonction du type de contrôle effectué sur la ligne. Ce filtre peut être programmé de manière à maintenir une liaison à bande étroite entre le commutateur public 6 et la boucle locale 10 et une liaison à large bande entre le DSLAM 2 et le module de mesure 14. Alternativement, ce filtre peut être programmé pour relier sélectivement le commutateur public 6 au module de mesure 14 tout en inhibant la liaison à bande étroite entre le commutateur public 6 et la boucle locale 10 et en maintenant la liaison à large bande entre le DSLAM 2 et la boucle locale 10.

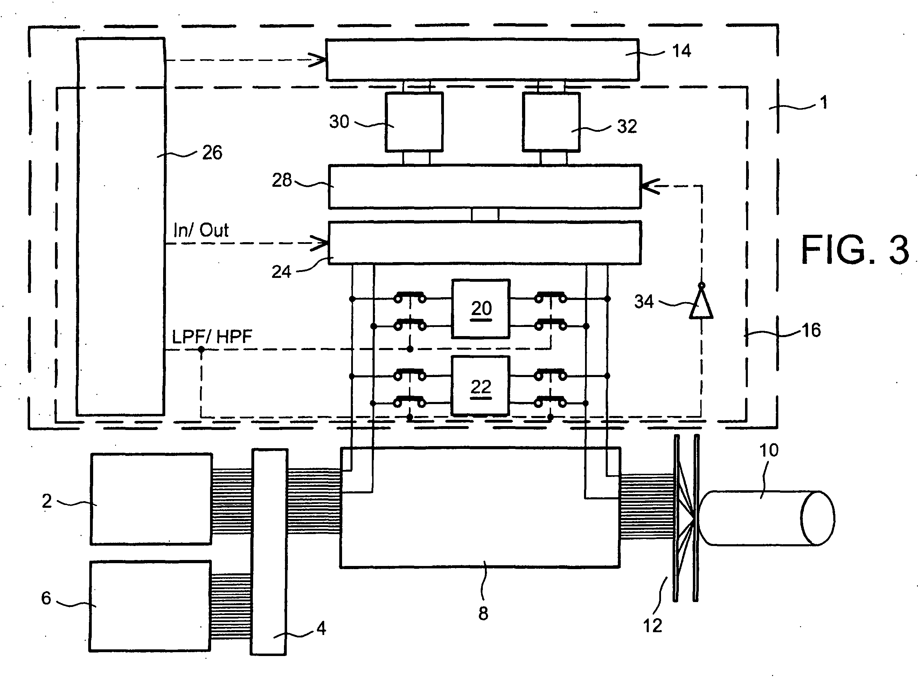

La figure 3 illustre un deuxième mode de réalisation dans lequel le module de commutation 16 comporte, un premier filtre passe-bas 20 et un premier filtre passe-haut 22 montés en parallèle avec la matrice de connexion 8. Le filtre passe-bas 20 est destiné à maintenir une communication à travers le canal téléphonique entre le commutateur public 6 et la boucle locale 10 lorsque la communication haut débit est interrompue pour contrôler les services fournis à travers le canal à large bande, et le premier filtre passe-haut 22 est destiné à maintenir une communication à travers le canal à large bande lorsque la communication bas débit est interrompue pour contrôler la ligne téléphonique.

Les filtres passe-bas 20 et passe-haut 22 sont reliés, via une première interface d'entée/sortie 24, à une unité de commande 26 destinée fournir un signal LPF (respectivement HPF) pour activer le filtre passe-bas 20, (respectivement le filtre passe-haut 22). Une deuxième interface 28 est reliée d'une part directement à la première interface 24, et d'autre part au module de mesure 14 via un deuxième filtre passe bas 30 et un deuxième filtre passe haut 32, et reçoit de l'unité de commande 26, via un inverseur 34, un signal LPF (respectivement HPF) lorsque la première interface 24 reçoit signal HPF (respectivement LPF) de manière à contrôler soit le canal à bande étroite soit le canal à large bande.

En fonctionnement, lorsque le canal à large bande doit être contrôlé, l'unité de commande 26 envoie à la première interface 24 un signal LPF qui active le premier filtre passe-bas 20. Parallèlement, la deuxième interface 28 reçoit via l'inverseur 34 un signal HPF qui active le deuxième filtre passe-haut 32 de sorte que la liaison à travers le canal téléphonique soit maintenue pendant que le module de mesure 14 reçoit uniquement le canal à large bande.

Alternativement, lorsque le canal à bande étroite doit être contrôlé, l'unité de commande 26 envoie à la première interface 24 un signal HPF qui active le premier filtre passe-haut 22. Parallèlement, la deuxième interface 28 reçoit via l'inverseur 34 un signal LPF qui active le deuxième filtre passe-bas 30 de sorte que la liaison à travers le canal à large bande soit maintenue pendant que le module de mesure 14 reçoit uniquement le canal téléphonique.

Ainsi, en activant simultanément le premier filtre passe-bas 20 et le deuxième filtre passe-haut 32, le dispositif selon l'invention permet de relier le module de mesure 14 au canal à large bande uniquement tout en maintenant la liaison à travers le canal à bande étroite, et en activant simultanément le premier filtre passe-haut 22 et le deuxième filtre passe-bas 30, le dispositif permet de relier le module de mesure 14 au canal à bande étroite uniquement tout en maintenant la liaison à travers le canal à large bande.

## Revendications

1. Dispositif de contrôle (1) d'une ligne de transmission comportant au moins un premier canal de transmission à large bande reliant au moins un abonné à un serveur de données numériques et au moins un deuxième canal transmission à bande étroite reliant ledit abonné à un réseau téléphonique, ledit dispositif comportant un bloc de mesure (14) destiné à évaluer les performances, rechercher les défauts et établir la qualité de la ligne et des services transmis à travers ladite ligne, **caractérisé en ce qu'**il comporte en outre un module de commutation (16) relié au bloc de mesure (14) et comprenant un filtre programmable apte à relier sélectivement le bloc de mesure (14) uniquement au canal de transmission à large bande (respectivement uniquement au canal de transmission à bande étroite) et à maintenir une liaison avec la boucle téléphonique locale uniquement à travers le canal de transmission à large bande (respectivement uniquement au canal de transmission à bande étroite).

2. Dispositif selon la revendication 1, **caractérisé en ce que** le canal de transmission haut débit est du type xDSL et le canal transmission à bande étroite est une ligne téléphonique numérique ou analogique.

3. Procédé de contrôle d'une ligne de transmission transportant une pluralité de canaux de transmission numériques et/ou analogiques au moyen d'un module de mesure (14), procédé **caractérisé en ce qu'**il comporte les étapes suivantes:
lorsque le canal à large bande doit être contrôlé, activer un premier filtre passe-bas (20), et parallèlement, activer un deuxième filtre passe-haut (32) via un inverseur (34) de sorte que la liaison à travers le canal téléphonique soit maintenue pendant que le module de mesure (14) reçoit uniquement le canal à large bande,
alternativement, lorsque le canal à bande étroite doit être contrôlé, activer le premier filtre passe-haut (22), et parallèlement, activer le deuxième filtre passe-bas (30) via l'inverseur (34) de sorte que la liaison à travers le canal à large bande soit maintenue pendant que le module de mesure (14) reçoit uniquement le canal téléphonique.

## Claims

1. Device (1) for checking a transmission line comprising at least one first broadband transmission channel connecting at least one subscriber to a digital data server and at least one second narrow band transmission channel connecting said subscriber to a telephone network, said device comprising a measuring block (14) for evaluating performance characteristics, searching for faults and establishing the quality of the line and services transmitted across said line, **characterized in that** it also comprises a switching module (16) connected to measuring block (14) and incorporating a programmable filter able to selectively connect the measuring block (14) solely to the broadband transmission channel (respectively solely to the narrow band transmission channel) and maintain a link with the local telephone loop solely across the broadband transmission channel (respectively solely to the narrow band transmission channel).

2. Device according to claim 1, **characterized in that** the high speed transmission channel is of the xDSL type and the narrow band transmission channel is a digital or analog telephone line.

3. Method for checking a transmission line transporting a plurality of digital and/or analog transmission channels by means of a measuring module (14), **characterized in that** it comprises the following stages:
- when the broadband channel has to be checked, activate a first low pass filter (20) and in parallel activate a second high pass filter (32) via an inverter (34) in such a way that the link across the telephone channel is maintained whilst the measuring module (14) solely receives the broadband channel,
- alternatively, when the narrow band channel has to be checked, activate the first high pass filter (22) and in parallel activate the second low pass filter (30) via inverter (34) in such a way that the link across the broadband channel is maintained whilst the measuring module (14) solely receives the telephone channel.

## Patentansprüche

1. Steuervorrichtung (1) einer Übertragungsleitung mit mindestens einem ersten Breitband-Übertragungskanal, der mindestens einen Teilnehmer mit einem digitalen Datenserver verbindet, und mindestens einem zweiten Schmalband-Übertragungskanal, der den Teilnehmer mit einem Telefonnetz verbindet, wobei die Vorrichtung einen Messblock (14) aufweist, der dazu bestimmt ist, die Leistungen abzuschätzen, die Mängel bzw. Fehler zu ermitteln sowie die Qualität der Leitung und der über die Leitung übertragenen Dienste sicherzustellen, **dadurch gekennzeichnet, dass** sie außerdem ein Schaltmodul (16) umfasst, das mit dem Messblock (14) verbunden ist und ein programmierbares Filter aufweist, das selektiv den Messblock (14) nur mit dem Breitband-Übertragungskanal (bzw. nur mit dem Schmalband-Übertragungskanal) verbinden kann, und eine Verbindung mit dem lokalen Telefonnetz nur über den Breitband-Übertragungskanal (bzw. nur über den Schmalband-Übertragungskanal) aufrechterhalten kann.

2. Vorrichtung nach Anspruch 1, **dadurch gekennzeichnet, dass** der Übertragungskanal mit hohem Durchsatz vom xDSL-Typ ist, und der Schmalband-Übertragungskanal eine digitale oder analoge Telefonleitung ist.

3. Steuerverfahren einer Übertragungsleitung, die mehrere digitale und/oder analoge Übertragungskanäle transportiert, mittels eines Messmoduls (14), wobei das Verfahren **dadurch gekennzeichnet ist, dass** es die folgenden Schritte umfasst:
wenn der Breitbandkanal gesteuert werden soll: Aktivieren eines ersten Tiefpass-Filters (20) und parallel hierzu Aktivieren eines zweiten Hochpass-Filters (32) über einen Umschalter (34) derart, dass die Verbindung über den Telefonkanal gehalten wird, während das Messmodul (14) nur den Breitband-Kanal empfängt,
andererseits, wenn der Schmalband-Kanal gesteuert werden soll: Aktivieren des ersten Hochpass-Filters (22) und parallel hierzu Aktivieren des zweiten Tiefpass-Filters (30) über den Umschalter (34) derart, dass die Verbindung über den Breitband-Kanal gehalten wird, während das Messmodul (14) nur den Telefonkanal empfängt.
